# EUROPÄISCHE PATENTSCHRIFT

(11) **EP 2 256 013 B1**
(45) Veröffentlichungstag und Bekanntmachung des Hinweises auf die Patenterteilung: **27.08.2014**
(21) Anmeldenummer: 10160183.9
(22) Anmeldetag: 16.04.2010
(51) Int. Cl.: B61C 7/02, B61C 7/04

(54) **Hybrides Antriebssystem für Schienenfahrzeuge**
Hybrid drive system for rail vehicles
Système d'entraînement hybride pour véhicules ferroviaires

(30) Priorität: 28.05.2009 DE 102009023101
(43) Veröffentlichungstag der Anmeldung: 01.12.2010
(73) Patentinhaber: Siemens Aktiengesellschaft, 80333 München (DE)
(72) Erfinder: Körner, Olaf, 90461, Nürnberg (DE)

(56) Entgegenhaltungen:
- DE-A1-102006 011 167
- US-A1- 2008 083 576

## Beschreibung

Die Erfindung betrifft ein Antriebssystem mit einer dynamoelektrischen Maschine, einem Verbrennungsmotor, einem elektrischen Energiespeicher und einem Druckspeicher, wobei die dynamoelektrische Maschine von dem Verbrennungsmotor angetrieben werden kann, um den elektrischen Energiespeicher zu laden. Über den Energiespeicher können sodann ein oder mehrere Antriebsmotoren mit elektrischer Energie versorgt werden, um beispielsweise ein Schienenfahrzeug anzutreiben.

Solch ein Antriebssystem ist aus der US 2008/0083576 A1 bekannt.

Derartige hybride Antriebssysteme werden beispielsweise bei dieselelektrischen Schienenfahrzeugen eingesetzt. Dasselbe Antriebskonzept ist auch für Straßenfahrzeuge wie PKW's und Busse bekannt. In der Regel ist hierbei der Energiespeicher als Zwischenkreiskondensator ausgeführt, der über einen meist dreiphasigen mit der dynamoelektrischen Maschine gekoppelten Gleichrichter eingangsseitig verbunden ist und über einen meist ebenfalls dreiphasigen Wechselrichter mit den Antriebsmotoren des entsprechenden Fahrzeugs gekoppelt ist. Einem solchen gattungsgemäßen System liegt der Gedanke zugrunde, ein elektrisch betriebenes Fahrzeug zu schaffen, dass seine Energie aus fossilen Brennstoffen bezieht und somit nicht an eine Elektrifizierung der Fahrstrecke gebunden ist.

Ein Vorteil elektrischer Antriebe gegenüber Antrieben mit Verbrennungsmotoren ist neben der vergleichsweise hohen Dynamik, die diese Antriebe auch ohne mechanische Getriebe aufweisen, ihre Rückspeisefähigkeit. Dieselelektrische Antriebssysteme sind jedoch in erster Linie für den Zweck entwickelt worden, auch ohne Elektrifizierung betrieben werden zu können. Damit fällt bei derartigen Systemen die Möglichkeit, Bremsenergie in ein Versorgungsnetz zurückzuspeisen, aus.

Um ein rekuperatives Bremsen zu ermöglichen, ist es bekannt, parallel zum Zwischenkreiskondensator einen hinsichtlich seiner Kapazität sehr viel größeren elektrischen Energiespeicher bereitzustellen, der eine beim Bremsen mittels der Antriebsmotoren generatorisch erzeugte elektrische Energie zwischenpuffern kann. Als elektrische Energiespeicher werden für diese Zwecke Doppelschichtkondensatoren (im englischen auch als "SuperCaps" bezeichnet) eingesetzt. Derartige elektrische Energiespeichersysteme sind insbesondere bei den hohen geforderten Speicherkapazitäten sehr teuer und schwer. Bei einem für ein Fahrzeug vorgesehenes Antriebssystem ist jedoch ein möglichst niedriges Gesamtgewicht erstrebenswert.

Der Erfindung liegt die Aufgabe zugrunde, ein möglichst kostengünstiges hybrides Antriebssystem mit der Möglichkeit eines rekuperativen Bremsens vorzuschlagen.

Diese Aufgabe wird durch ein Antriebssystem mit den Merkmalen des Anspruchs 1 gelöst, d.h. durch ein Antriebssystem mit
- einer dynamoelektrischen Maschine,
- einem Verbrennungsmotor zum Antrieb der dynamoelektrischen Maschine,
- einem elektrischen Energiespeicher zum Speichern einer von der dynamoelektrischen Maschine in einem generatorischen Betrieb abgegebenen elektrischen Energie, und
- einem Druckspeicher,
wobei das Antriebssystem derart gestaltet ist, dass die dynamoelektrische Maschine sowohl mit der im elektrischen Energiespeicher gespeicherten Energie als auch mit einer im Druckspeicher gespeicherten Energie angetrieben werden kann.

Vorteilhafte Ausführungsformen der Erfindung sind den Unteransprüchen zu entnehmen.

Der Erfindung liegt die Erkenntnis zugrunde, dass ein hybrides Antriebssystem durch die Einbindung des vergleichsweise einfach aufgebauten, leichten und kostengünstigen Druckspeichers auf besonders effiziente Weise für eine Bremsenergierückgewinnung ertüchtigt werden kann. Die dynamoelektrische Maschine ist hierzu sowohl mit dem elektrischen Energiespeicher als auch mit dem Druckspeicher gekoppelt, so dass der Energiefluss zum Antrieb der Maschine über beide Speicher erfolgen kann. Wird die dynamoelektrische Maschine mit Hilfe der im elektrischen Energiespeicher gespeicherten Energie angetrieben, so arbeitet sie als Motor. Sie wandelt also elektrische Energie in mechanische Energie um, die genutzt werden kann, um ein im Druckspeicher angeordnetes Medium zu komprimieren. Dies geschieht beispielsweise bei einem Bremsen eines Fahrzeugs, welches mit dem erfindungsgemäßen Antriebssystem ausgestattet ist. In einem solchen Fall würden die Antriebsmotoren des Fahrzeugs generatorisch elektrische Energie erzeugen, die zunächst in dem elektrischen Energiespeicher gespeichert wird. Diese elektrische Energie wird zum Antrieb der dynamoelektrischen Maschine verwendet, die wiederum das Medium im Druckspeicher komprimiert.

Bei dem elektrischen Energiespeicher kann es sich hier insbesondere um einen Zwischenkreiskondensator eines Umrichters handeln. Dieser dient in erster Linie der Glättung der Zwischenkreisspannung und wird bei dem oben beschriebenen elektrischen Antrieb der dynamoelektrischen Maschine permanent von den Antriebsmotoren gespeist. Somit fließt die Energie zum Antrieb der dynamoelektrischen Maschine von den Antriebsmotoren über den Zwischenkreiskondensator, der hier als elektrischer Energiespeicher im Sinne des Anspruchs 1 fungiert, zu der dynamoelektrischen Maschine.

Die auf diese Weise im Druckspeicher gespeicherte Energie steht wiederum beispielsweise für einen Beschleunigungsvorgang zur Verfügung. Sie kann also genutzt werden, um die dynamoelektrische Maschine anzutreiben, so dass diese als Generator arbeitet und den elektrischen Energiespeicher auflädt.

Im normalen Betrieb eines derartigen hybriden Antriebssystems wird die dynamoelektrische Maschine von dem Verbrennungsmotor angetrieben, der seine Energie aus einem fossilen Energieträger bezieht. Insbesondere in Beschleunigungsphasen kann durch den erfindungsgemäßen Druckspeicher der Kraftstoffverbrauch extrem minimiert werden. Der Druckspeicher ist in der Lage, die zum Beschleunigen erforderliche Energie nahezu verzögerungsfrei zur Verfügung zu stellen. Spitzenleistungen, wie sie bei einem Beschleunigungsvorgang benötigt werden, müssen nicht mehr allein durch den Verbrennungsmotor bereitgestellt werden, sondern können zumindest teilweise durch die im Druckspeicher gespeicherte Energie geliefert werden.

In vorteilhafter Ausgestaltung der Erfindung kann der Verbrennungsmotor durch die im Druckspeicher gespeicherte Energie angetrieben werden. Bei einer solchen Ausgestaltung der Erfindung wird zunächst der Verbrennungsmotor mit der im Druckspeicher gespeicherten Energie beschleunigt, der sodann die dynamoelektrische Maschine über eine Antriebswelle antreibt.

Eine insbesondere unter Effizienzgesichtspunkten vorteilhafte Ausführungsform der Erfindung kennzeichnet sich dadurch, dass der Verbrennungsmotor als Dieselmotor ausgeführt ist. Dieselmotoren haben im Vergleich zu Benzinmotoren einen höheren Wirkungsgrad. Ferner ist die Energiedichte von Dieselkraftstoff verhältnismäßig hoch, so dass hohe Reichweiten mit einem dieselelektrisch betriebenen Fahrzeug erzielt werden können.

In vorteilhafter Ausgestaltung der Erfindung umfasst das Antriebssystem eine mit dem Verbrennungsmotor über eine Antriebswelle gekoppelte Fluidenergiemaschine, wobei die Fluidenergiemaschine dazu ausgebildet ist, die im Druckspeicher gespeicherte Energie in mechanische Energie zum Antrieb des Verbrennungsmotors zu wandeln. Die Fluidenergiemaschine, bei der es sich insbesondere um eine Pumpe/Motoreinheit handelt, wird während eines Bremsvorgangs vor dem Verbrennungsmotor angetrieben, so dass ein im Druckspeicher befindliches Medium komprimiert wird. Die hierbei gewonnene Energie kann bei einem Beschleunigungsvorgang genutzt werden, indem die Fluidenergiemaschine als Motor betrieben wird und den Verbrennungsmotor unterstützt. Vorteilhaft ist es hierbei, wenn die Fluidenergiemaschine über die Antriebswelle zum Verdichten eines im Druckspeicher gespeicherten Mediums über den Verbrennungsmotor antreibbar ist. Bei einer solchen Ausgestaltung ist die Fluidenergiemaschine über die Antriebswelle mit dem Verbrennungsmotor verbunden, der seinerseits über eine weitere Antriebswelle mit der dynamoelektrischen Maschine gekoppelt ist. Beim rekuperativen Bremsen treibt die dynamoelektrische Maschine über die weitere Antriebswelle den Verbrennungsmotor an, der seinerseits über die Antriebswelle auf die Fluidenergiemaschine wirkt, die als Pumpe arbeitend das Medium im Druckspeicher komprimiert.

Eine besonders kompakte Bauweise wird bei einer Ausführungsform der Erfindung erzielt, bei der die Fluidenergiemaschine an den Verbrennungsmotor angeflanscht ist.

Auf die Fluidenergiemaschine kann in weiterer Ausgestaltung der Erfindung verzichtet werden, wenn der Verbrennungsmotor als Verdichter zum Verdichten und Entspannen eines im Druckspeicher abgespeicherten Mediums eingerichtet ist. Hierbei wird die Funktion der zuvor beschriebenen Fluidenergiemaschine direkt vom Verbrennungsmotor mit übernommen. Beim Entspannen des Mediums wird der Verbrennungsmotor durch das Medium als zusätzliche oder gar alternative Energiequelle zum Treibstoff betrieben.

Eine weitere vorteilhafte Ausführungsform des erfindungsgemäßen Antriebssystems kennzeichnet sich dadurch, dass dieses einen ersten Umrichter, über den die dynamoelektrische Maschine mit dem elektrischen Energiespeicher verbunden ist, mindestens einen Antriebsmotor und einen zweiten Umrichter, über den der mindestens eine Antriebsmotor mit dem elektrischen Energiespeicher verbunden ist, aufweist. Um das rekuperative Bremsen zu ermöglichen, müssen beide Umrichter einen bidirektionalen Energiefluss zulassen. Somit ist der erste Umrichter als Pulswechselrichter mit abschaltbaren Halbleiterbauelementen auszuführen.

In vorteilhafter Ausgestaltung der Erfindung ist der elektrische Energiespeicher als Zwischenkreiskondensator ausgeführt. Hierdurch kann das Antriebssystem mit gängigen und vielfach bewährten Spannungszwischenkreisumrichtern betrieben werden. Der Zwischenkreiskondensator dient in erster Linie zur Glättung der Zwischenkreisspannung. Die durch die Leistungshalbleiter verursachten Schaltrippel werden durch eine ausreichende groß gewählte Kapazität des Zwischenkreiskondensators stark reduziert.

Je nach Leistungsbereich ist es natürlich auch denkbar und von der Erfindung umfasst, den elektrischen Energiespeicher als Zwischenkreisdrossel auszuführen und den Stromrichter entsprechend als Stromzwischenkreisumrichter mit entsprechenden Halbleiterbauelementen auszugestalten.

Ein eigener dynamoelektrisch wirkender Anlasser für den Verbrennungsmotor kann in vorteilhafter Ausgestaltung der Erfindung dadurch eingespart werden, dass Mittel zum Starten des Verbrennungsmotors durch die im Druckspeicher gespeicherte Energie im Antriebssystem vorhanden sind.

Das vorgeschlagene Antriebssystem eignet sich für verschiedenste Fahrzeuge. Insbesondere Schienenfahrzeuge wie beispielsweise dieselelektrische Lokomotiven können mit einem Antriebssystem nach einer der zuvor beschriebenen Ausführungsformen sehr effizient betrieben werden.

Im Folgenden wird die Erfindung anhand der in den Figuren dargestellten Ausführungsbeispiele näher beschrieben und erläutert. Es zeigen:
- FIG 1: ein aus dem Stand der Technik bekanntes dieselelekt- risches Antriebssystem,
- FIG 2: ein Antriebssystem gemäß einer Ausführung der Erfin- dung und
- FIG 3: ein weiteres Antriebssystem gemäß einer weiteren Aus- führung der Erfindung.

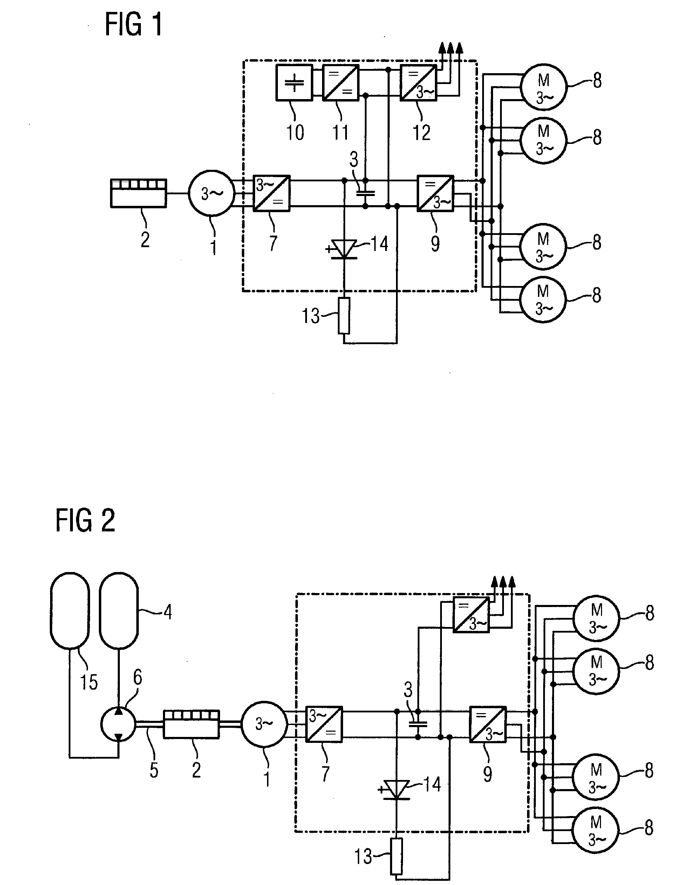

FIG 1 zeigt ein aus dem Stand der Technik bekanntes dieselelektrisches Antriebssystem. Dieses Antriebssystem umfasst einen als Dieselmotor ausgebildeten Verbrennungsmotor 2, der über eine Welle mit einer als Generator betriebenen dynamoelektrischen Maschine 1 verbunden ist. Ein erster Umrichter 7, der als Gleichrichter betrieben wird, wandelt eine an den Ausgangsklemmen der dynamoelektrischen Maschine 1 anliegende dreiphasige Wechselspannung in eine Gleichspannung um. Diese liegt an einem elektrischen Energiespeicher 3 an, der als Zwischenkreiskondensator ausgeführt ist und derart dimensioniert ist, dass die von den Halbleiterbauelementen des ersten Umrichters 7 bzw. eines zweiten Umrichters 9 erzeugten Schaltrippel genügend geglättet werden und eine am Zwischenkreiskondensator anliegende Zwischenkreisspannung bei kleineren Leistungsschwankungen im Wesentlichen konstant bleibt.

Über den zweiten Umrichter 9 wird die Zwischenkreisspannung in eine dreiphasige Wechselspannung umgerichtet, die an die Klemmen von Antriebsmotoren 8 angelegt wird, mit denen das dieselelektrische Fahrzeug schließlich angetrieben wird. Bei dem hier dargestellten Antriebssystem arbeitet die dynamoelektrische Maschine stets als Generator.

Ein rekuperatives Bremsen wird durch einen zusätzlichen Energiespeicher ermöglicht, der parallel zum Zwischenkreiskondensator geschaltet ist. Es handelt sich hierbei um sogenannte SuperCaps 10, die über einen Gleichspannungswandler 11 an den Zwischenkreiskondensator angekoppelt sind. Beim Bremsen des Antriebssystems arbeiten die Antriebsmotoren 8 generatorisch, so dass diese über den zweiten Umrichter 9 den Zwischenkreiskondensator und die SuperCaps 10 laden. Bei einem Beschleunigen des Antriebssystems kann nun die in den SuperCaps 10 gespeicherte elektrische Energie zusätzlich zu der mittels des Dieselgenerators und der dynamoelektrischen Maschine 1 bereitgestellten Energie verfügbar gemacht werden.

Die elektrischen Energiespeicher 3 bzw. die in den SuperCaps 10 gespeicherte Energie wird nicht nur zum Antrieb des Fahrzeugs verwendet sondern zusätzlich zur Versorgung von Hilfsantrieben. Hierzu richtet ein dritter Umrichter 12 die Gleichspannung in eine dreiphasige Wechselspannung zur Versorgung weiterer Komponenten im Antriebssystem um.

Um eine Überspannung am Zwischenkreiskondensator zu vermeiden, umfasst das dargestellte Antriebssystem weiterhin einen Bremswiderstand 13, in dem überschüssige Energie auf herkömmliche Weise "vernichtet" werden kann. Sobald eine Überspannung im Zwischenkreis detektiert wird, wird ein Gate-Turn-of Thyristor (GTO) 14 gezündet, so dass der Zwischenkreiskondensator über den Bremswiderstand soweit entladen werden kann, dass die Zwischenkreisspannung unter einem zulässigen Schwellwert liegt.

Die Speicherung der rekuperativ bereitgestellten Energie in den SuperCaps 10 ist vergleichsweise teuer. Superkondensatoren sind nach wie vor nicht kostengünstig zu bekommen. Ferner wird ein erhebliches Bauvolumen für die Superkondensatoren benötigt, um die beim Bremsen einer dieselelektrischen Lok erzeugte rekuperative Energie vollständig puffern zu können.

FIG 2 zeigt ein Antriebssystem gemäß einer Ausführung der Erfindung. Prinzipiell gleichwirkende Elemente sind hierbei mit denselben Bezugszeichen versehen wie in FIG 1. Der wesentliche Unterschied zu dem Antriebssystem gemäß FIG 1 ist die Ausgestaltung und die Ankopplung des zusätzlichen Energiespeichers zur Aufnahme der Bremsenergie. Der Verbrennungsmotor 2 ist hierbei nicht nur über eine Welle mit der dynamoelektrischen Maschine 1 verbunden, sondern auch über eine Antriebswelle mit einer Fluidenergiemaschine 6, die mit einem Druckspeicher 4 gekoppelt ist. Mit Hilfe dieser Fluidenergiemaschine, die als Pumpe/Motoreinheit geführt ist, kann das Medium im Druckspeicher 4 komprimiert werden. Dies geschieht, in dem die Pumpe/Motoreinheit das Medium von einem Niederdrucktank 15 in den Druckspeicher 4 pumpt. Die Pumpe/Motoreinheit führt diesen Vorgang während des rekuperativen Bremsens durch. Hierbei wird die von den Antriebsmotoren 8 während des Bremsvorgangs bereitgestellte und von dem zweiten Umrichter 9 gleichgerichtete elektrische Spannung von dem ersten Umrichter 7 wiederum als dreiphasige Wechselspannung an die Klemmen der dynamoelektrischen Maschine 1 angelegt. Auf den teueren und schweren zusätzlichen elektrischen Energiespeicher mit SuperCaps 10 aus FIG 1 kann hierbei verzichtet werden.

Der erste Umrichter 7 ist als Pulswechselrichter mit aktiven Halbleiterbauelementen wie IGBTs oder GTOs ausgelegt, damit er einen bidirektionalen Energiefluss ermöglicht. Die dynamoelektrische Maschine 1 arbeitet in diesem Betriebsfall als Motor und treibt den Verbrennungsmotor 2 an. Dieser wirkt wiederum über die Antriebswelle 5 auf die Pumpe/Motoreinheit, mit der das Medium vom Niederdrucktank 15 in den Druckspeicher 4 gepumpt wird.

Soll anschließend das Fahrzeug beschleunigt werden, gibt der Druckspeicher 4 seine Energie über die Pumpe/Motoreinheit wieder ab, so dass die Fluidenergiemaschine 6 den Verbrennungsmotor 2 über die Antriebswelle 5 antreibt. Diese Energie wird schließlich von dem Verbrennungsmotor 2 auf die dynamoelektrische Maschine 1 übertragen, die entsprechend den generatorischen Betrieb wieder aufnimmt um elektrische Energie zum Antrieb der Antriebsmotoren 8 bereitzustellen. Je nach erforderlicher Energie bezieht der Verbrennungsmotor seine Energie zusätzlich aus einem fossilen Brennstoff.

Der hier dargestellte Druckspeicher 4 und dessen Kopplung mit Hilfe der Fluidenergiemaschine 6 mit dem Verbrennungsmotor 2 stellt eine deutlich effizientere und kostengünstigere Realisierung eines hybriden Antriebssystems dar, mit dem sich Bremsenergie rückspeisen lässt.

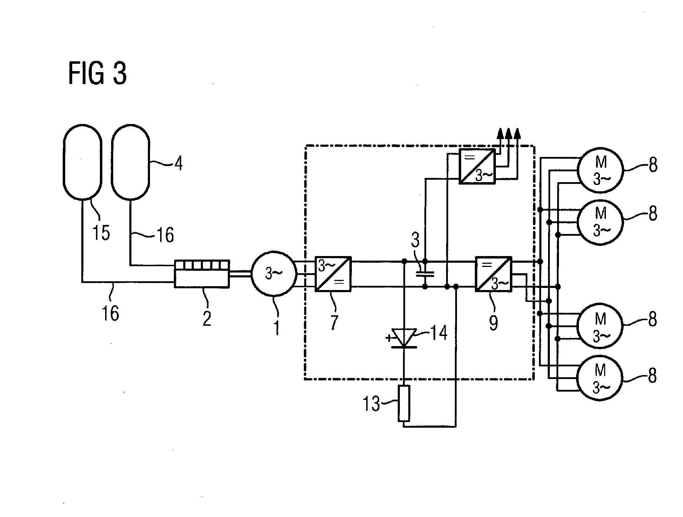

FIG 3 zeigt ein weiteres Antriebssystem gemäß einer weiteren Ausführungsform der Erfindung. Diese Ausführungsform unterscheidet sich von der in FIG 2 dargestellten Ausführungsform dadurch, dass keine eigene Fluidenergiemaschine 6 als Verdichter zum Verdichten und zum Entspannen des im Druckspeicher 4 vorhandenen Mediums vorgesehen ist. Vielmehr wird diese Aufgabe von dem Verbrennungsmotor 2 mit übernommen. Um dies zu ermöglichen, werden von dem Druckspeicher 4 und von dem Niederdrucktank 15 jeweils Druckleitungen 16 direkt auf einen oder zwei Zylinder des Verbrennungsmotors 2 geführt. Es entfällt die zusätzliche Pumpe/Motoreinheit, so dass der Hardwareaufwand für das Gesamtsystem reduziert werden kann.

## Patentansprüche

1. Antriebssystem mit
- einer dynamoelektrischen Maschine (1),
- einem Verbrennungsmotor (2) zum Antrieb der dynamoelektrischen Maschine (1),
- einem elektrischen Energiespeicher (3) zum Speichern einer von der dynamoelektrischen Maschine in einem generatorischen Betrieb abgegebenen elektrischen Energie, und
- einem Druckspeicher (4),
**dadurch gekennzeichnet, dass** das Antriebssystem derart gestaltet ist, dass die dynamoelektrische Maschine (1) sowohl mit der im elektrischen Energiespeicher (3) gespeicherten Energie als auch mit einer im Druckspeicher (4) gespeicherten Energie angetrieben werden kann.

2. Antriebssystem nach Anspruch 1,
wobei der Verbrennungsmotor (2) durch die im Druckspeicher (4) gespeicherte Energie angetrieben werden kann.

3. Antriebssystem nach Anspruch 1 oder 2,
wobei der Verbrennungsmotor (2) als Dieselmotor ausgeführt ist.

4. Antriebssystem nach einem der vorhergehenden Ansprüche mit einer mit dem Verbrennungsmotor (2) über eine Antriebswelle (5) gekoppelten Fluidenergiemaschine (6), wobei die Fluidenergiemaschine (6) dazu ausgebildet ist, die im Druckspeicher (4) gespeicherte Energie in mechanische Energie zum Antrieb des Verbrennungsmotors (2) zu wandeln.

5. Antriebssystem nach Anspruch 4,
wobei die Fluidenergiemaschine (6) über die Antriebswelle (5) zum Verdichten eines im Druckspeicher (4) gespeicherten Mediums über den Verbrennungsmotor (2) antreibbar ist.

6. Antriebssystem nach Anspruch 4 oder 5,
wobei die Fluidenergiemaschine (6) an den Verbrennungsmotor (2) angeflanscht ist.

7. Antriebssystem nach einem der Ansprüche 1 bis 3,
wobei der Verbrennungsmotor (2) als Verdichter zum Verdichten und Entspannen eines im Druckspeicher (4) gespeicherten Mediums eingerichtet ist.

8. Antriebssystem nach einem der vorhergehenden Ansprüche, wobei das Antriebssystem
- einen ersten Umrichter (7), über den die dynamoelektrische Maschine (1) mit dem elektrischen Energiespeicher (3) verbunden ist,
- mindestens einen Antriebsmotor (8) und
- einen zweiten Umrichter (9), über den der mindestens eine Antriebsmotor (8) mit dem elektrischen Energiespeicher (3) verbunden ist,
aufweist.

9. Antriebssystem nach einem der vorhergehenden Ansprüche, wobei der elektrische Energiespeicher (3) als Zwischenkreiskondensator ausgeführt ist.

10. Antriebssystem nach einem der vorhergehenden Ansprüche mit Mitteln zum Starten des Verbrennungsmotors (2) durch die im Druckspeicher (4) gespeicherte Energie.

11. Schienenfahrzeug mit einem Antriebssystem nach einem der vorhergehenden Ansprüche.

## Claims

1. Drive system with
- a dynamoelectric machine (1),
- a combustion engine (2) for driving the dynamoelectric machine (1),
- an electrical energy storage device (3) for storing an electrical energy emitted by the dynamoelectric machine during generator operation, and
- an accumulator (4),
**characterised in that** the drive system is designed such that the dynamoelectric machine (1) can be driven by both the energy stored in the electrical energy storage device (3) and also by energy stored in the accumulator (4).

2. Drive system according to claim 1,
wherein the combustion engine (2) can be driven by the energy stored in the accumulator (4).

3. Drive system according to claim 1 or 2,
wherein the combustion engine (2) is embodied as a diesel motor.

4. Drive system according to one of the preceding claims having a fluid energy machine (6) coupled with the combustion motor (2) via a drive shaft (5), wherein the fluid energy machine (6) is configured to convert the energy stored in the accumulator (4) into mechanical energy to drive the combustion engine (2).

5. Drive system according to claim 4,
wherein the fluid energy machine (6) can be driven by the drive shaft (5) for compressing a medium stored in the accumulator (4) via the combustion engine (2).

6. Drive system according to claim 4 or 5,
wherein the fluid energy machine (6) is flange-mounted on the combustion engine (2).

7. Drive system according to one of claims 1 to 3,
wherein the combustion engine (2) is set up as a compressor for compressing and releasing a medium stored in the accumulator (4).

8. Drive system according to one of the preceding claims, wherein the drive system has
- a first converter (7), by means of which the dynamoelectric machine (1) is connected to the electrical energy storage device (3),
- at least one drive motor (8) and
- a second converter (9), by means of which the at least one drive motor (8) is connected to the electrical energy storage device (3).

9. Drive system according to one of the preceding claims, wherein the electrical energy storage device (3) is embodied as an intermediate circuit capacitor.

10. Drive system according to one of the preceding claims having means for starting the combustion engine (2) via the energy stored in the accumulator (4).

11. Rail vehicle with a drive system according to one of the preceding claims.

## Revendications

1. Système d'entraînement comprenant
- une machine ( 1 ) dynamoélectrique,
- un moteur ( 2 ) à combustion interne pour l'entraînement de la machine ( 1 ) dynamoélectrique,
- un accumulateur ( 3 ) d'énergie électrique pour l'accumulation d'une énergie électrique cédé par la machine dynamoélectrique dans un fonctionnement en génératrice, et
- un accumulateur ( 4 ) de pression,
**caractérisé en ce que** le système d'entraînement est conformé de manière à ce que la machine ( 1 ) dynamoélectrique puisse être entraînée tant par l'énergie accumulée dans l'accumulateur ( 3 ) d'énergie électrique qu'également par une énergie accumulée dans l'accumulateur ( 4 ) de pression.

2. Système d'entraînement suivant la revendication 1,
dans lequel le moteur ( 2 ) à combustion interne peut être entraîné par l'énergie accumulée dans l'accumulateur ( 4 ) de pression.

3. Système d'entraînement suivant la revendication 1 ou 2,
dans lequel le moteur ( 2 ) à combustion interne est réalisé sous la forme d'un moteur diesel.

4. Système d'entraînement suivant l'une des revendications précédentes, comprenant une machine ( 6 ) à énergie fluidique couplée au moteur ( 2 ) à combustion interne par un arbre ( 5 ) d'entraînement, la machine ( 6 ) à énergie fluidique étant constituée pour transformer l'énergie accumulée dans l'accumulateur ( 4 ) de pression en énergie mécanique pour l'entraînement du moteur ( 2 ) à combustion interne.

5. Système d'entraînement suivant la revendication 4,
dans lequel la machine ( 6 ) à énergie fluidique peut être entraînée par l'arbre ( 5 ) d'entraînement pour la compression par le moteur ( 2 ) à combustion interne d'un milieu accumulé dans l'accumulateur ( 4 ) de pression.

6. Système d'entraînement suivant la revendication 4 ou 5,
dans lequel la machine ( 6 ) à énergie fluidique est bridée sur le moteur ( 2 ) à combustion interne.

7. Système d'entraînement suivant l'une des revendications 1 à 3,
dans lequel le moteur ( 2 ) à combustion interne est agencé en compresseur pour la compression et la détente d'un milieu accumulé dans l'accumulateur ( 4 ) de pression.

8. Système d'entraînement suivant l'une des revendications précédentes,
dans lequel le système d'entraînement a
- un premier convertisseur ( 7 ) par lequel, la machine ( 1 ) dynamoélectrique est reliée à l'accumulateur ( 3 ) d'énergie électrique,
- au moins un moteur ( 8 ) d'entraînement et
- un deuxième convertisseur ( 9 ) par lequel le au moins un moteur ( 8 ) d'entraînement est relié à l'accumulateur ( 3 ) d'énergie électrique.

9. Système d'entraînement suivant l'une des revendications précédentes,
dans lequel l'accumulateur ( 3 ) d'énergie électrique est réalisé sous la forme d'un condensateur de circuit intermédiaire.

10. Système d'entraînement suivant l'une des revendications précédentes, comprenant des moyens pour faire démarrer le moteur ( 2 ) à combustion interne par l'énergie accumulée dans l'accumulateur ( 4 ) de pression.

11. Véhicule ferroviaire ayant un système d'entraînement suivant l'une des revendications précédentes.
